# EUROPEAN PATENT SPECIFICATION

(11) **EP 2 192 332 B1**
(45) Date of publication and mention of the grant of the patent: **09.03.2011**
(21) Application number: 09013049.3
(22) Date of filing: 15.10.2009
(51) Int. Cl.: F16H 61/12

(54) **Gear change control device and motorcycle including the same**
Gangwechselsteuerungsvorrichtung und Motorrad damit
Dispositif de contrôle de changement de vitesses et motocyclette l'incluant

(30) Priority: 28.11.2008 JP 2008304077
(43) Date of publication of application: 02.06.2010
(73) Proprietor: Yamaha Hatsudoki Kabushiki Kaisha, Shizuoka-ken Shizuoka 438-8501 (JP)
(72) Inventor: Zenno, Toru, 2500 Shingai, Iwata-shi Shizuoka-ken 438-8501 (JP)
(74) Representative: Zimmermann, Tankred Klaus

(56) References cited:
- EP-A2- 1 898 129
- JP-A- 2002 067 741
- US-A1- 2006 035 747

## Description

### FIELD OF THE INVENTION

The present invention relates to a gear change control device and a motorcycle including the same.

### BACKGROUND OF THE INVENTION

In the field of motorcycles, automatic gear change mechanism for switching the gear positions by an actuator such as an electric motor or the like are conventionally known. Motorcycles including an automatic gear change mechanism in which either one of the following two manners of driving can be selected by an operation made by a rider on a mode switch are known: driving by which the rider operates a shift switch to drive an actuator (hereinafter, this manner of driving will be referred to as the "manual mode driving"), and driving by which a control device automatically controls the actuator in accordance with the running state of the motorcycle (hereinafter, this manner of driving will be referred to as the "automatic mode driving") (see, for example, patent document 1, below, in accordance with the preamble of claim 1).

### PRIOR ART DOCUMENTS

### PATENT DOCUMENTS

Patent document 1: Japanese Laid-Open Patent Publication No. 2002-67741

With a conventional motorcycle switchable between the manual mode driving and the automatic mode driving, it is difficult to keep driving even with a relatively insignificant malfunction and so the limp home capability is low. Namely, even when a relatively insignificant malfunction occurs, the motorcycle cannot be easily driven to a maintenance shop or the like and needs to be transported by another carrier.

### SUMMARY OF THE INVENTION

The present invention made in light of the above-described circumstances has an object of improving the limp home capability of a motorcycle switchable between the manual mode driving and the automatic mode driving.

The present invention is directed to a gear change control device mountable on a motorcycle and including a body and an automatic gear change mechanism which includes a dog clutch type gear change device having a plurality of gear positions and an actuator for making a gear change among the gear positions of the gear change device. The gear change control device includes a shift switch operable by a rider for issuing an instruction to make a gear change among the gear positions of the gear change device; an automatic control device for automatically controlling the actuator based on a running state of the motorcycle; a mode switch for, by an operation made by the rider, making a switch between manual mode driving, by which the actuator is caused to make a gear change among the gear positions of the gear change device based on an operation made by the rider on the shift switch, and automatic mode driving, by which the actuator is caused to make a gear change among the gear positions of the gear change device by an automatic control executed by the automatic control device; and a driving permission device for restraining the automatic mode driving and permitting the manual mode driving when a predetermined malfunction occurs.

According to the present invention, the limp home capability of a motorcycle switchable between the manual mode driving and the automatic mode driving can be improved.

### BRIEF DESCRIPTION OF THE DRAWINGS

FIG. 1 is a side view of a motorcycle.
FIG. 2 is a cross-sectional view showing an internal structure of a power unit.
FIG. 3 is a diagram showing a control structure of a gear change control device according to embodiment 1.
FIG. 4 is a schematic view showing a structure of a steering handle.
FIG. 5 shows a flow of control until limp home control is executed by the gear change control device according to embodiment 1.
FIG. 6 shows an example of control flow of making a switch between manual mode driving and automatic mode driving.
FIG. 7 shows another example of control flow of making a switch between the manual mode driving and the automatic mode driving.
FIG. 8 is a diagram showing a control structure of a gear change control device according to embodiment 2.
FIG. 9 shows a flow of control until limp home control is executed by the gear change control device according to embodiment 2.
FIG. 10 is a diagram showing a control structure of a gear change control device according to embodiment 3.
FIG. 11 shows a flow of control until limp home control is executed by the gear change control device according to embodiment 3.
FIG. 12 shows an example of a display panel included in the motorcycle.

### DETAILED DESCRIPTION OF THE PREFERRED EMBODIMENTS

### <Embodiment 1>

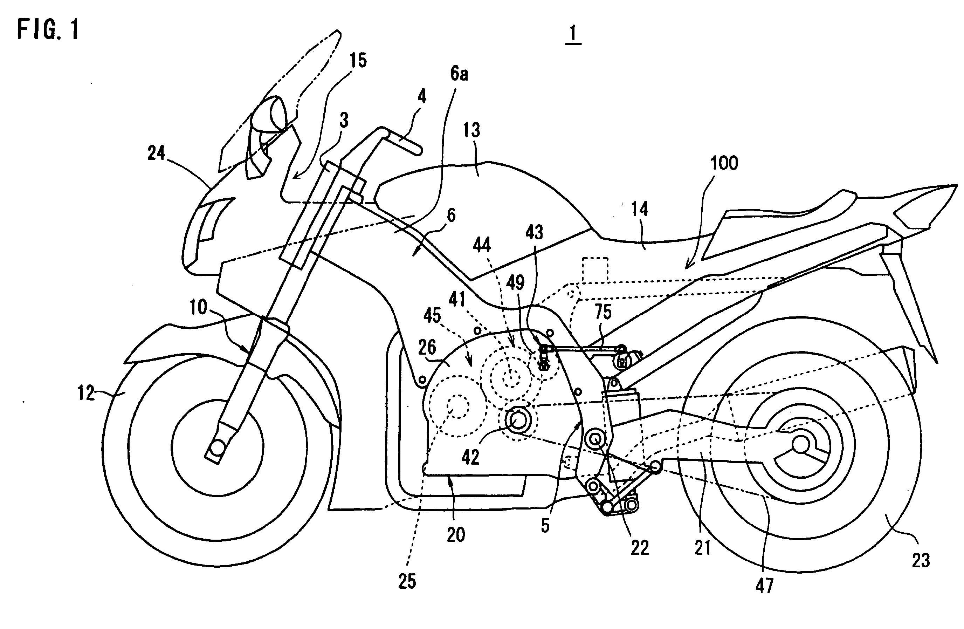

FIG. 1 is a side view showing a motorcycle 1. Note that a motorcycle according to this embodiment may be of a scooter type, an off-road type, a racer replica type or the like.

As shown in FIG. 1, the motorcycle 1 includes a body 100. The body 100 includes at least a steering handle 4, a seat 14, a front wheel 12, and a rear wheel 23 acting as a driving wheel. The front wheel 12 is located in a front portion of the body 100, and the rear wheel 23 is located in a rear portion of the body 100. The body 100 includes a head pipe 3 and a body frame 6. The body frame 6 includes a pair of left and right frame portions 6a extending rearward from the head pipe 3. FIG. 1 shows only one frame portion 6a. A rear portion of the frame portion 6a extends downward and is connected to a rear arm bracket 5. A front end portion of a rear arm 21 is supported by the rear arm bracket 5 via a pivot shaft 22 such that the front end portion is swingable upward and downward. The rear wheel 23 is supported by a rear end portion of the rear arm 21.

A front fork 10 is pivotably supported by the head pipe 3. At a top end of the front fork 10, the steering handle 4 is provided. At a bottom end of the front fork 10, the front wheel 12 is rotatably provided. Above the frame portion 6a, a fuel tank 13 is provided. Rearward with respect to the fuel tank 13, the seat 14 is provided.

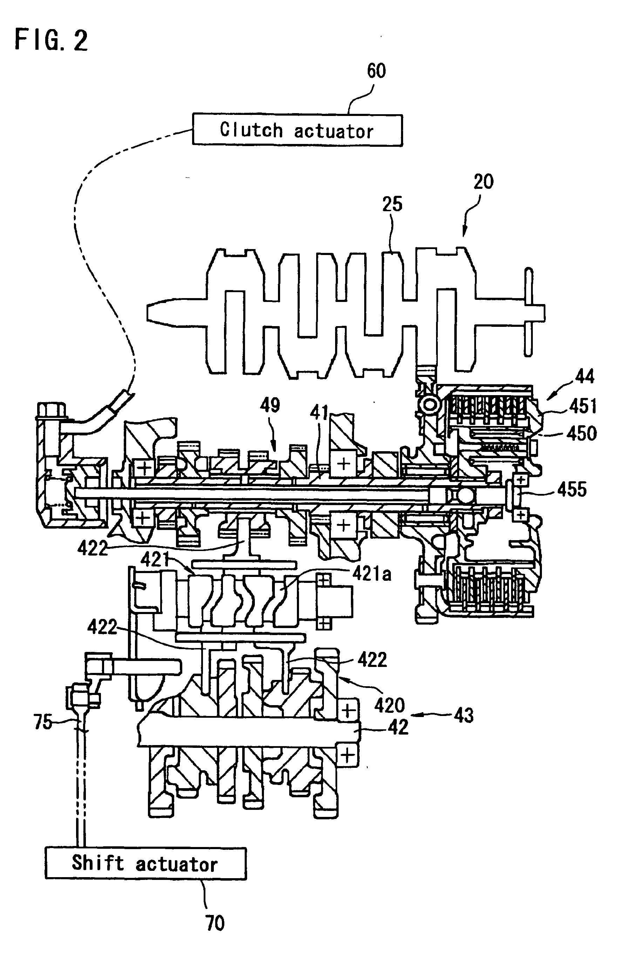

A power unit 20 is suspended by the frame portion 6a and the rear arm bracket 10. The power unit 20 includes at least an engine 45 described later, a clutch 44, and a shift mechanism 43 (see FIG. 2). The engine 45, the clutch 44, and the shift mechanism 43 are integrally incorporated into a crank case 26.

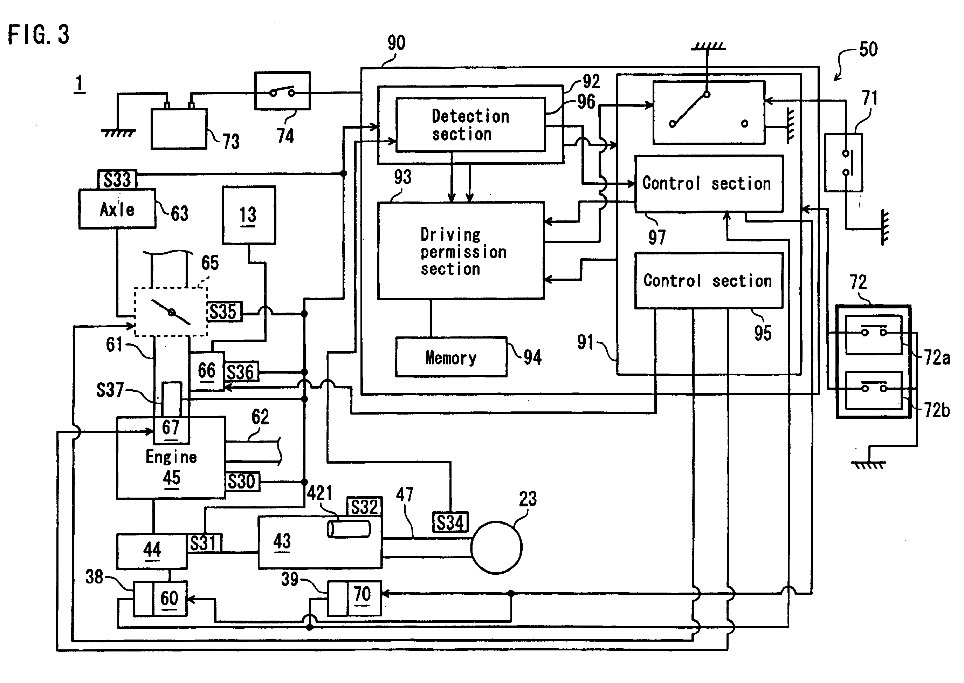

FIG. 2 is a cross-sectional view showing an internal structure of the power unit 20. As shown in FIG. 2, the power unit 20 includes the engine 45, the clutch 44, and the shift mechanism 43. A main shaft 41 is provided parallel to a crank shaft 25. A drive shaft 42 is provided parallel to the main shaft 41. A gear change control device 50 according to this embodiment includes the clutch 44, the shift mechanism 43, a clutch actuator 60, a shift actuator 70, and an ECU 90 (see FIG. 3). By driving the clutch actuator 60, the clutch 44 can be connected and disconnected. By driving the shift actuator 70, shift gear switching in the shift mechanism 43 can be made, namely, the gear position in the shift mechanism 43 can be changed.

As described later, the ECU (Electric Control Unit) 90 (see FIG. 3) controls the driving of the clutch actuator 60 and the shift actuator 70. In this embodiment, an automatic gear change mechanism includes at least the shift mechanism 43, the shift actuator 70, the clutch 44, and the clutch actuator 60, and the ECU 90.

When the clutch actuator 60 is driven, a push rod 455 moves by being pushed rightward in FIG. 2. This causes the push rod 455 to push a pressure plate 451 rightward in FIG. 2. When the pressure plate 451 is pushed rightward in FIG. 2, the clutch 44 is put into a disconnected state. In the clutch 44, the pressure plate 451 moves in one of two axial directions of the main shaft 41 in accordance with which of the magnitude of the driving force of the clutch actuator 60 and the magnitude of the urging force of a spring 450 is larger. The clutch 44 is put into a connected state or a disconnected state in accordance with such a movement.

The main shaft 41 is provided with a multi-stage shift gear 49. The drive shaft 42 is provided with a plurality of shift gears 420 in correspondence with the multi-stage shift gear 49.

The shift mechanism 43 includes a shift cam 421. In an outer circumferential surface of the shift cam 421, a plurality of cam grooves 421a are formed. To each cam groove 421a, a shift fork 422 is attached. Each shift fork 422 is in engagement with a predetermined gear of the main shaft 41 and a predetermined gear of the drive shaft 42. By rotating the shift cam 41, each of the plurality of shift forks 422 is guided by the cam groove 421a to move in an axial direction of the main shaft 41. This changes the gear position in the shift mechanism 43. As a result, rotation is transmitted between the main shaft 41 and the drive shaft 42 via the shift gear 49 and the shift gears 420 at a predetermined gear change ratio.

The shift cam 421 rotates by a predetermined angle by a reciprocal movement of a shift rod 75. The shift rod 75 is reciprocated by driving the shift actuator 70.

In the case where the clutch 44 is in a connected state at the time when the engine 45 is driven, a torque of the engine 45 is transmitted to the main shaft 41 via the clutch 44. Rotation is transmitted between the main shaft 41 and the drive shaft 42 at a predetermined gear change ratio, and thus the drive shaft 42 is rotated. When the drive shaft 42 is rotated, the torque is transmitted by a power transmission mechanism 47 (see FIG. 1) for connecting the drive shaft 42 and the rear wheel 23 (see FIG. 1), and thus the rear wheel 23 is rotated.

The gear change control device 50 does not need to include the clutch actuator 60 and the shift actuator 70 separately. Namely, the gear change control device 50 may include a single actuator for connecting and disconnecting the clutch 44 and also making shift gear switching in the shift mechanism 43. In this case, the actuator has a function of connecting and disconnecting the clutch 44 and a function of making shift gear switching in the shift mechanism 43. Hereinafter, the clutch actuator 60 and the shift actuator 70 will be collectively referred to simply as an "actuator". The term "actuator" is a general term for the clutch actuator 60 and the shift actuator 70. Hence, the actuator is not limited to an actuator having both of a function of connecting and disconnecting the clutch 44 and a function of making shift gear switching in the shift mechanism 43.

Now, the gear change control device 50 in this embodiment will be described. FIG. 3 is a block diagram showing a control structure of the gear change control device 50. As shown in FIG. 3, the gear change control device 50 includes the shift mechanism 43, the clutch 44, the clutch actuator 60, the shift actuator 70, and the ECU (Electric Control Unit) 90. In this embodiment, the ECU 90 includes at least an automatic driving control section 91, a running state detection section 92, and a driving permission section 93.

The motorcycle 1 includes a power supply device 73 and a main switch 74. When a rider of the motorcycle 1 operates the main switch 74, an electric current flows between the power supply device 73 and the ECU 90 to make the ECU 90 capable of being actuated. The motorcycle 1 may include a relay switch or the like (not shown). In this case, a part of the ECU 90 may be actuated even when the main switch 74 is not operated.

In the power unit 20 (see FIG. 1), the crank shaft 25 (see FIG. 2) includes an engine rotation speed sensor S30. In FIG. 3, the engine rotation speed sensor S30 is adjacent to the engine 45. The main shaft 41 (see FIG. 2) includes a main shaft rotation speed sensor S31. In FIG. 3, the main shaft rotation speed sensor S31 is adjacent to the clutch 44.

The motorcycle 1 includes an intake pipe 61, an exhaust pipe 62, an axle 63, a throttle valve 65, a fuel supply device 66, and an ignition device 67. The intake pipe 61 is connected to the engine 45. The exhaust pipe 62 is connected to the engine 45 at a position different from the position at which the intake pipe 61 is connected to the engine 45. The throttle valve 65 is provided inside the intake pipe 61. The throttle valve 65 adjusts the amount or the speed of air flowing in the intake pipe 61. On a middle portion of the intake pipe 61, the fuel supply device 66 is provided. The fuel supply device 66 may be a so-called carburetor or a fuel ignition device. The fuel supply device 66 supplies fuel stored in the fuel tank 13 to the inside of the intake pipe 61. The ignition device 67 is provided inside the engine 45. In this embodiment, the time to ignite the ignition device 67 is electronically controlled. Alternatively, the time to ignite the ignition device 67 may be mechanically controlled.

In this embodiment, an opening degree of the throttle valve 65 is electronically controlled. As described later, the opening degree of the throttle valve 65 is controlled based on, for example, the rotation speed of the engine 45, the velocity of the body 100 or the like. The opening degree of the throttle valve 65 is changed based on an amount of operation made on the axle 63. By the change of the opening degree of the throttle valve 65, the amount of air flowing in the intake pipe 61 is changed.

The motorcycle 1 includes an axle operation amount sensor S33, a throttle valve position sensor S35, a fuel supply amount sensor S36, an ignition time sensor S37, and a shift position sensor S32. The axle operation amount sensor S33 detects an amount of operation made on the axle 63 as an opening degree. The throttle valve position sensor S35 detects an opening degree of the throttle valve 65. The fuel supply amount sensor S36 detects an amount of fuel supplied by the fuel supply device 66. The ignition time sensor S37 detects the time when the mixture is ignited by the ignition device 67. The shift position sensor S32 detects a rotation angle of the shift cam 421 (see FIG. 2) to detect the gear position in the shift mechanism 43.

The motorcycle 1 includes a vehicle velocity sensor S34 for detecting a vehicle velocity V of the body 100. Each of the above-described sensors may detect the respective displacement amount to be detected directly or indirectly, or may have a calculation function and calculate the physical amount to be calculated, from a predetermined physical amount.

The gear change control device 50 includes a potentiometer 38 for detecting a driving amount of the clutch actuator 60 and a potentiometer 39 for detecting a driving amount of the shift actuator 70. In more detail, the potentiometer 38 detects a rotation angle of the clutch actuator 60. The potentiometer 39 detects a rotation angle of the shift actuator 70. In the case where the gear change control device 50 includes an actuator having the function of the clutch actuator 60 and the function of the shift actuator 70 as described above, the gear change control device 50 does not need to include two potentiometers, i.e., the potentiometer 38 and the potentiometer 39.

The running state detection section 92 of the ECU 90 detects a running state of the motorcycle 1 based on the value detected by each sensor. In this embodiment, the running state detection section 92 includes a vehicle velocity detection section 96. The vehicle velocity detection section 96 receives a signal input by the vehicle velocity sensor S34 based on the vehicle velocity V. Thus, the vehicle velocity detection section 96 detects the vehicle velocity V.

The running state detection section 92 receives a signal input by the throttle position sensor S35 based on the opening degree of the throttle valve 65. Thus, the running state detection section 92 detects the opening degree of the throttle valve 65. The running state detection section 92 also receives a signal input by the fuel supply amount sensor S36 based on the amount of fuel supplied by the fuel supply device 66. Thus, the running state detection section 92 detects the amount of fuel supplied by the fuel supply device 66. The running state detection section 92 also receives a signal input by the ignition time sensor S37 based on the time when the ignition device 67 is ignited. Thus, the running state detection section 92 detects the time when the ignition device 67 is ignited. The running state detection section 92 also receives a signal input by the engine rotation speed sensor S30 based on the rotation speed of the crank shaft 25. Thus, the running state detection section 92 detects the rotation speed of the crank shaft 25. The running state detection section 92 also receives a signal input by the main shaft rotation speed sensor S31 based on the rotation speed of the main shaft 41. Thus, the running state detection section 92 detects the rotation speed of the main shaft 41. The running state detection section 92 also receives a signal input by the shift position sensor S32 based on the rotation angle of the shift cam 421. Thus, the running state detection section 92 detects the current gear position in the shift mechanism 43.

The gear change control device 50 can execute the driving of causing the actuator to change the gear position in the shift mechanism 43 based on an operation made on a shift switch 72 described later. The gear change control device 50 can also execute the driving of causing the actuator to change the gear position in the shift mechanism 43 by automatic control executed by the automatic driving control section 91. Hereinafter, the driving of causing the actuator to change the gear position in the shift mechanism 43 based on the operation made on the shift switch 72 will be referred to as the "manual mode driving". The driving of causing the actuator to change the gear position in the shift mechanism 43 by automatic control executed by the automatic driving control section 91 will be referred to as the "automatic mode driving". The automatic driving control section 91 can execute the control in the manual mode driving and the control in the automatic mode driving.

The automatic driving control section 91 in this embodiment is structured such that the control in the manual mode driving and the control in the automatic mode driving are switchable. Hereinafter, the control in the manual mode driving will be referred to as the "manual mode control Mc", and the control in the automatic mode driving will be referred to as the "automatic mode control Ac".

The manual mode control Mc and the automatic mode control Ac can be switched by, for example, a mode switch 71. The mode switch 71 is operable by the rider to switch the manual mode control Mc to the automatic mode control Ac or vice versa.

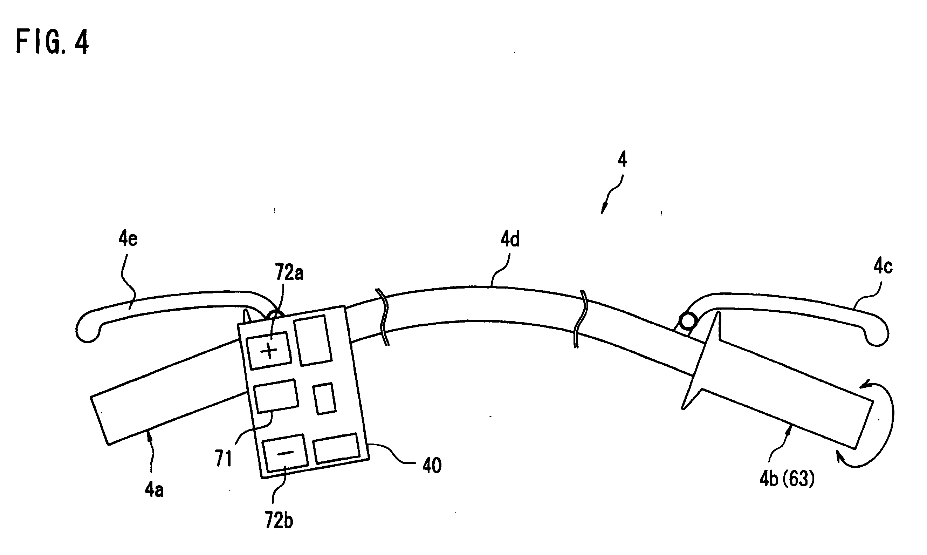

FIG. 4 is a schematic view of the steering handle 4. The steering handle 4 includes a handle bar 4d, a left grip 4a and a right grip 4b. In this embodiment, the right grip 4b acts as the axle 63 and is rotatable within a predetermined rotation angle. The axle 63 is operable by the rider to rotate within the predetermined rotation angle. By operating the axle 63, the output of the engine 45 is adjusted. The steering handle 4 also includes a front brake lever 4c and a rear brake lever 4e. A switch panel 40 is provided on a left portion of the handle bar 4d.

The mode switch 71 is provided on, for example, a front surface of the switch panel 40. The mode switch 71 is, for example, a push type button. Each time the mode switch 71 is switched, the gear change control device 50 switches the manual mode driving to the automatic mode driving or switches the automatic mode driving to the manual mode driving.

The mode switch 71 is not limited to being the push type button. The mode switch 71 may be, for example, a slide type switch. In this case, when the slide type mode switch 71 is located, for example, on the left in a left/right direction, the gear change control device 50 executes the manual mode driving. When the slide type mode switch 71 is located, for example, on the right in the left/right direction, the gear change control device 50 executes the automatic mode driving.

The shift switch 72 is provided on the switch panel 40. The shift switch 72 includes a shift up switch 72a for changing the gear position to an upper position of the shift mechanism 43 and a shift down switch 72b for changing the gear position to a lower position of the shift mechanism 43.

When the rider switches the shift switch 72 while the automatic driving control section 91 is executing the manual mode control Mc, the gear position in the shift mechanism 43 is changed. When the rider switches the shift switch 72, the automatic driving control section 91 drives the clutch actuator 60 and the shift actuator 70 except for a predetermined case. Namely, when the rider switches the shift switch 72 while the automatic driving control device 91 is executing the manual mode control Mc, the automatic driving control section 91 starts changing the gear position in the shift mechanism 43 except for a predetermined case.

The predetermined case is, for example, when the rider operates the shift up switch 72a where the gear position in the shift mechanism 43 is the uppermost position. The predetermined case is also, for example, when the rider operates the shift down switch 72b where the gear position in the shift mechanism 43 is the lowermost position. The gear position in the shift mechanism 43 is detected by the shift position sensor S32.

As shown in FIG. 3, the automatic driving control section 91 receives a signal based on the actuation made on the mode switch 71 and thus can switch the manual mode control Mc to the automatic mode control Ac or vice versa. Alternatively, the automatic driving control section 91 may be structured so as to detect, while executing the automatic mode control Ac, that the shift switch 72 has been switched. In this case, the shift switch 72 has a function of the mode switch 71. Namely, the automatic driving control section 91 may be structured such that when the shift switch 72 is switched while the automatic driving control section 91 is executing the automatic mode control Ac, the automatic driving control section 91 is switched from the automatic driving control Ac to the manual mode control Mc.

The automatic driving control section 91 receives a signal input by the running state detection section 92 based on the running state of the motorcycle 1. Based on the running state of the motorcycle 1, the automatic driving control section 91 automatically controls the actuator.

The automatic driving control section 91 includes a control section 97 for automatically controlling the actuator using the detection result obtained by the vehicle velocity sensor S34. The control section 97 receives a signal input by the vehicle velocity detection section 96 based on the vehicle velocity V and automatically controls the actuator.

When the main switch 74 (see FIG. 3) is operated by the rider and thus the power supply between the power supply device 73 and the gear change control device 50 is put into an ON state from an OFF state, the gear change control device 50 is set to the manual mode driving. Hereinafter, an example of switching the gear change control device 50 between the manual mode driving and the automatic mode driving will be described.

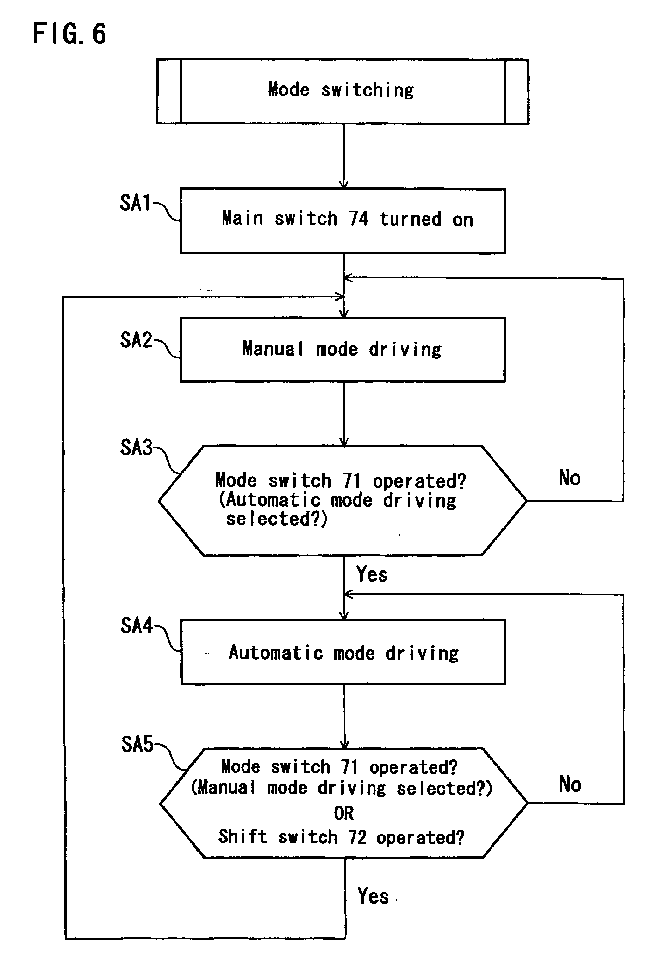

As shown in FIG. 6, in step SA1, the main switch 74 is operated by the rider, and so an electric current flows between the gear change control device 50 and the power supply device 73 (see FIG. 3). When the electric current starts flowing between the gear change control device 50 and the power supply device 73, the gear change control device 50 is in the manual mode driving as in step SA2.

In step SA3 following step SA2, it is determined whether or not the mode switch 71 has been operated. When it is determined in step SA3 that the rider has operated the mode switch 71 to select the automatic mode driving, the processing advances to step SA4. In step SA4, the manual mode driving is switched to the automatic mode driving. When it is determined in step SA3 that the rider has not operated the mode switch 71 and thus has not selected the automatic mode driving, the processing returns to step SA2.

In step SA5 following step SA4, it is determined whether or not either one of the mode switch 71 and the shift switch 72 has been operated. When it is determined in step SA5 that the rider has operated the mode switch 71 to select the manual mode driving, the processing returns to step SA2. In step SA2, the automatic mode driving is switched to the manual mode driving. When it is determined in step SA5 that the rider has operated the shift switch 72, the processing returns to step SA2. Until it is determined in step SA5 that the rider has operated the mode switch 71 to select the manual mode driving or operated the shift switch 72, steps SA4 and SA5 are repeated.

The manner of switching the gear change control device 50 between the manual mode driving and the automatic mode driving is not limited to that shown in FIG. 6. Hereinafter, another example of switching the gear change control device 50 between the manual mode driving and the automatic mode driving will be described.

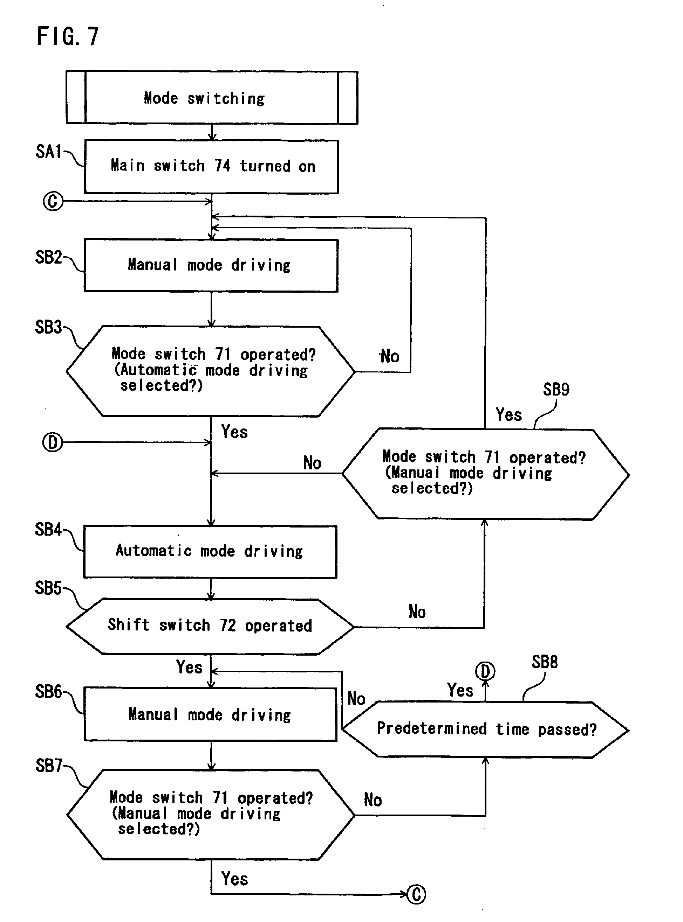

As shown in FIG. 7, when the electric current starts flowing between the gear change control device 50 and the power supply device 73, the gear change control device 50 is in the manual mode driving as in step SB2. In step SB2, the automatic driving control section 91 (see FIG. 3) executes the same manual mode control Mc as in step SA2 (see FIG 6).

In step SB3, it is determined whether or not the mode switch 71 has been operated. When it is determined in step SB3 that the rider has operated the mode switch 71 to select the automatic mode driving, the processing advances to step SB4. In step SB4, the manual mode driving is switched to the automatic mode driving. When it is determined in step SB3 that the rider has not operated the mode switch 71 and thus has not selected the automatic mode driving, the processing returns to step SB2.

In step SB5 following step SB4, it is determined whether or not the shift switch 72 has been operated. When it is determined in step SB5 that the rider has operated the shift switch 72, the processing advances to step SB6. In step SB6, the automatic mode driving is switched to the manual mode driving. When it is determined in step SB5 that the rider has not operated the shift switch 72, the processing advances to step SB9.

In step SB9, it is determined whether or not the mode switch 71 has been operated. When it is determined in step SB9 that the rider has operated the mode switch 71 to select the manual mode driving, the processing returns to step SB2. When it is determined in step SB9 that the rider has not operated the mode switch 71 and thus has not selected the manual mode driving, the processing returns to step SB4.

In step SB7, it is determined whether or not the mode switch 71 has been operated. When it is determined in step SB7 that the rider has operated the mode switch 71 to select the manual mode driving, the processing returns to step SB2. When it is determined in step SB7 that the rider has not operated the mode switch 71 and thus has not selected the manual mode driving, the processing advances to step SB8.

In step SB8, it is determined whether or not a predetermined time has passed since the automatic mode driving was switched to the manual mode driving in step SB6. In step SB8, it may be determined whether or not the motorcycle 1 (see FIG. 1) has run a predetermined distance since the automatic mode driving was switched to the manual mode driving in step SB6. When it is determined in step SB8 that the predetermined time has passed since the automatic mode driving was switched to the manual mode driving in step SB6, the processing returns to step SB4. When it is determined in step SB8 that the predetermined time has not passed since the automatic mode driving was switched to the manual mode driving in step SB6, the processing returns to step SB6.

As shown in FIG. 3, the ECU 90 includes the driving permission section 93 for restraining the automatic mode driving and permitting the manual mode driving when the gear change control device 50 has a predetermined malfunction. In the gear change control device 50, the driving permission section 93 acts as a driving permission device.

The predetermined malfunction of the gear change control device 50 is a malfunction by which the automatic mode driving is impossible but the manual mode driving is possible. Namely, when a malfunction by which the automatic mode driving is impossible but the manual mode driving is possible occurs, the driving permission section 93 restrains the automatic mode driving and permits the manual mode driving.

The driving permission section 93 receives a signal input by the running state detection section 92 based on the running state of the motorcycle 1. The driving permission section 93 determines whether or not any of the running state detection section 92 and the sensors has a malfunction from the input signal. The driving permission section 93 receives a signal input by the automatic driving control section 91 based on the control made on the actuator. The driving permission section 93 determines whether or not the automatic driving control section 91 has a malfunction from the input signal.

The driving permission section 93 receives a signal input by the vehicle velocity detection section 96 based on the vehicle velocity V. The driving permission section 93 determines whether or not either one of the vehicle velocity detection section 96 and the vehicle velocity sensor S34 has a malfunction from the input signal. The driving permission section 93 receives a signal input by the control section 97 based on the control made on the actuator. The driving permission section 93 determines whether or not the control section 97 has a malfunction from the input signal.

The ECU 90 includes a memory 94. The memory 94 stores data necessary for the gear change control device 50 to execute control. Regarding the gear change control device 50, the memory 94 stores a malfunction by which the automatic mode driving is possible but the manual mode driving is impossible, a malfunction by which the manual mode driving is possible but the automatic mode driving is impossible, and a malfunction by which neither the manual mode driving nor the automatic mode driving is possible.

The driving permission section 93 compares the signals input by the running state detection section 92 and the automatic driving control section 91 against the data stored on the memory 94 to determine whether or not the gear change control device 50 has a malfunction. In this embodiment, the driving permission section 93 compares the signals input by the vehicle velocity detection section 96 and the control section 97 against the data stored on the memory 94 to determine whether or not the gear change control device 50 has a malfunction. Namely, the driving permission section 93 determines whether or not either one of the vehicle velocity sensor S34 and the control section 97 has a malfunction in order to determine whether or not the gear change control device 50 has a malfunction.

In the case where the gear change control device 50 is in the automatic mode driving when the predetermined malfunction occurs, the driving permission section 93 switches the automatic mode driving to the manual mode driving regardless of the operation made by the rider. In this embodiment, in the case where the gear change control device 50 is in the automatic mode driving when the vehicle velocity sensor S34 or the control section 97 has a malfunction, the driving permission section 93 switches the automatic mode driving to the manual mode driving regardless of the operation made on the mode switch 71. At this point, the automatic driving control section 91 is switched from the automatic mode control Ac to the manual mode control Mc.

Note that in this embodiment, the manual mode control Mc executed by the automatic driving control section 91 when the vehicle velocity sensor S34 or the control section 97 has a malfunction is different from the manual mode control Mc executed when no malfunction occurs. Namely, in the case where the gear change control device 50 is in the manual mode driving, a control section 95 described later executes a different manner of control when the gear change control device 50 has the predetermined malfunction from when the gear change control device 50 does not have the predetermined malfunction. The manual mode driving executed when the gear change control device 50 does not have the predetermined malfunction includes usual manual mode driving. The usual manual mode driving is the manual mode driving executed when the gear change control device 50 does not have any malfunction. Herein, the manual mode control Mc executed by the automatic driving control section 91 when the vehicle velocity sensor S34 or the control section 97 has a malfunction will be referred to as the "limp home control".

The case where the gear change control device 50 does not have the predetermined malfunction includes a case where the gear change control device 50 has a malfunction different from the predetermined malfunction. In the case where the gear change control device 50 is in the manual mode driving, the control section 95 described later executes a different manner of control when the gear change control device 50 has the predetermined malfunction from when the gear change control device 50 has a malfunction different from the predetermined malfunction.

The automatic driving control section 91 includes the control section 95 for controlling the engine 45. The control section 95 executes control of adjusting the opening degree of the throttle valve 65, the amount of fuel supplied by the fuel supply device 66, or the time to ignite the ignition device 67. When executing the limp home control, the control section 95 executes a different manner of control from the manual mode control Mc other than the limp home control. Namely, the output of the engine 45 is different when the automatic driving control section 91 executes the limp home control from when the automatic driving control section 91 executes the manual mode control Mc other than the limp home control. Specifically, the output of the engine 45 is suppressed more when the automatic driving control section 91 executes the limp home control than when the automatic driving control section 91 executes the manual mode control Mc other than the limp home control.

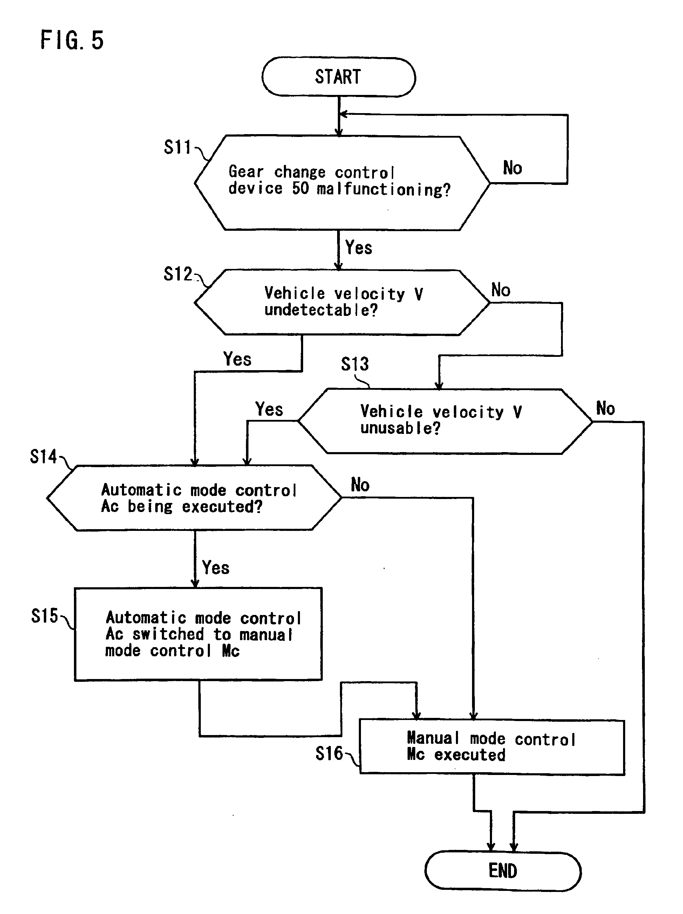

Hereinafter, how the automatic mode control Ac is switched to the manual mode control Mc and the limp home control is executed when the predetermined malfunction occurs will be described. FIG. 5 shows a flow of control until the limp home control is executed in the ECU 90 of the gear change control device 50 in this embodiment.

First in step S11, it is determined whether or not the gear change control device 50 has a malfunction. When it is determined in step S11 that the gear change control device 50 has a malfunction, the processing advances to step S12. When it is determined in step S11 that the gear change control device 50 does not have a malfunction, step S11 is repeated.

In step S12, it is determined whether or not the malfunction which the gear change control device 50 is determined to have in step S11 is a malfunction of the vehicle velocity sensor S34. When the vehicle velocity sensor S34 has a malfunction, the gear change control device 50, for example, cannot detect the vehicle velocity V accurately. When it is determined in step S12 that the malfunction is of the vehicle velocity sensor S34, the processing advances to step S14. When it is determined in step S12 that the malfunction is not of the vehicle velocity sensor S34, the processing advances to step S13.

In step S13, it is determined whether or not the malfunction which the gear change control device 50 is determined to have in step S11 is a malfunction of the control section 97. When the control section 97 has a malfunction, the gear change control device 50, for example, cannot drive the actuator based on the vehicle velocity V. Namely, when the control section 97 has a malfunction, the automatic driving control section 91 cannot execute any control using the vehicle velocity V. When it is determined in step S13 that the malfunction is of the control section 97, the processing advances to step S14. When it is determined in step S13 that the malfunction is not of the control section 97, the limp home control is not executed and the processing is finished.

In step S14, it is determined whether or not the control currently executed by the automatic driving control section 91 is the automatic mode control Ac. When it is determined in step S14 that the automatic driving control section 91 is not currently executing the automatic mode control Ac, namely, that the automatic driving control section 91 is currently executing the manual mode control Mc, the processing advances to step S16. When it is determined in step S14 that the automatic driving control section 91 is currently executing the automatic mode control Ac, the processing advances to step S15.

In step S15, the control to be executed by the automatic driving control section 91 is switched from the automatic mode control Ac to the manual mode control Mc. After the automatic mode control Ac is switched to the manual mode control Mc in step S15, the processing advances to step S16.

In step S16, the automatic driving control section 91 executes the manual mode control Mc. In this step, the limp home control, by which the output of the engine 45 (see FIG. 2) is suppressed more than by the usual manual mode control Mc, is executed. As described above, the gear change control device 50 switches the automatic mode driving to the manual mode driving when the predetermined malfunction occurs.

### (Function and effect)

As described above, when the predetermined malfunction occurs, the driving permission section 93 in this embodiment restrains the automatic mode control and permits the manual mode control. The driving permission section 93 receives a signal input by the running state detection section 92 based on the running state of the motorcycle 1, and determines whether or not any of the running state detection section 92 and the sensors has a malfunction from the input signal. The driving permission section 93 receives a signal input by the automatic driving control section 91 based on the control made on the actuator, and determines whether or not the automatic driving control section 91 has a malfunction from the input signal.

Owing to this, when a malfunction occurs by which automatic mode driving is impossible but the manual mode driving is possible, the gear change control device 50 is permitted to execute the manual mode driving although being restrained from executing the automatic mode driving. In other words, when a malfunction occurs by which automatic mode control Ac is difficult to execute but the manual mode control Mc is possible, the automatic driving control section 91 cannot execute the automatic mode control Ac but can execute the manual mode control Mc. For example, when a malfunction occurs by which the automatic mode control Ac is difficult to execute but the running of the motorcycle 1 is possible, the actuator can be driven by an operation made by the rider on the switch 72. Owing to this, when a malfunction occurs by which the automatic mode driving is difficult but the running of the motorcycle 1 is possible, the gear position in the shift mechanism 43 can be changed.

Accordingly, when a malfunction occurs by which the automatic mode driving is difficult to execute but the running of the motorcycle 1 is possible, the gear change control device 50 in this embodiment can keep driving the motorcycle 1 in the manual mode driving. Accordingly, in this embodiment, the limp home capability of the motorcycle 1 switchable between the manual mode driving and the automatic mode driving can be improved.

In this embodiment, when the predetermined malfunction occurs, the gear change control device 50 is automatically switched from the automatic mode driving to the manual mode driving regardless of whether the mode switch 71 has been operated or not. Therefore, in this embodiment, when a malfunction occurs by which the automatic mode driving is difficult to execute but the running of the motorcycle 1 is possible, the gear change control device 50 is automatically switched to the manual mode driving. This allows the gear change control device 50 in this embodiment to easily keep driving the motorcycle 1. For this reason, in this embodiment, the limp home capability of the motorcycle 1 switchable between the manual mode driving and the automatic mode driving can be improved.

In this embodiment, the predetermined malfunction is a malfunction of the vehicle velocity sensor S34 or the control section 97. When the vehicle velocity sensor S34 has a malfunction, the gear change control device 50, for example, cannot detect the vehicle velocity V accurately. When the control section 97 has a malfunction, the gear change control device 50, for example, cannot drive the actuator based on the vehicle velocity V.

However, the gear change control device 50 in this embodiment can execute the manual mode driving even when the vehicle velocity sensor S34 or the control section 97 has a malfunction. By the automatic driving control section 91 executing the manual mode control Mc, the gear change control device 50 can execute the manual mode driving. The manual mode control Mc is executable even when the vehicle velocity sensor S34 cannot detect the vehicle velocity V accurately. With the manual mode control Mc, the actuator can be driven by an operation made by the rider on the shift switch 72 without the control section 97 driving the actuator using the vehicle velocity V.

Namely, the gear change control device 50 in this embodiment can execute the manual mode control Mc even when there is a malfunction relating to the vehicle velocity V. Therefore, even with a malfunction relating to the vehicle velocity V, the gear change control device 50 in this embodiment can keep driving the motorcycle 1 in the manual mode driving. For this reason, in this embodiment, the limp home capability of the motorcycle 1 switchable between the manual mode driving and the automatic mode driving can be improved.

The motorcycle 1 in this embodiment includes the engine 45. The gear change control device 50 in this embodiment includes the control section 95 for controlling the engine 45. In the case where the gear change control device 50 is in the manual mode driving when the predetermined malfunction occurs, the control section 95 executes a different manner of control from when the usual manual mode driving is executed. Namely, in the case where the gear change control device 50 is in the manual mode driving, the control section 95 executes a different manner of control when the predetermined malfunction occurs from when no malfunction occurs. Accordingly, the gear change control device 50 in this embodiment can execute a different manner of control when the predetermined malfunction occurs from in the normal state. Owing to this, when the predetermined malfunction occurs, the control suitable to the malfunction can be executed and so the load on the motorcycle 1 can be alleviated.

In the case where the gear change control device 50 is in the manual mode driving, the control section 95 executes a different manner of control when the predetermined malfunction occurs from when a malfunction different from the predetermined malfunction occurs. Owing to this, the gear change control device 50 in this embodiment can execute a different manner of control when the predetermined malfunction occurs from when a malfunction different from the predetermined malfunction occurs.

As described above, when a malfunction occurs by which the automatic mode driving is difficult to execute but the running of the motorcycle 1 is possible, the gear change control device 50 in this embodiment can keep driving the motorcycle 1 in the manual mode driving. Namely, the limp home capability of the motorcycle 1 having the gear change control device 50 in this embodiment mounted thereon is improved.

### <Embodiment 2>

In embodiment 1, the driving permission section 93 determines whether or not either one of the vehicle velocity sensor S34 and the control section 97 has a malfunction in order to determine whether or not the gear change control device 50 has a malfunction. Alternatively, the driving permission section 93 may determine whether or not another section has a malfunction in order to determine whether or not the gear change control device 50 has a malfunction. Hereinafter, the gear change control device 50 according to this embodiment will be described. Identical elements to those in embodiment 1 will bear identical reference numerals thereto and the descriptions thereof will be omitted.

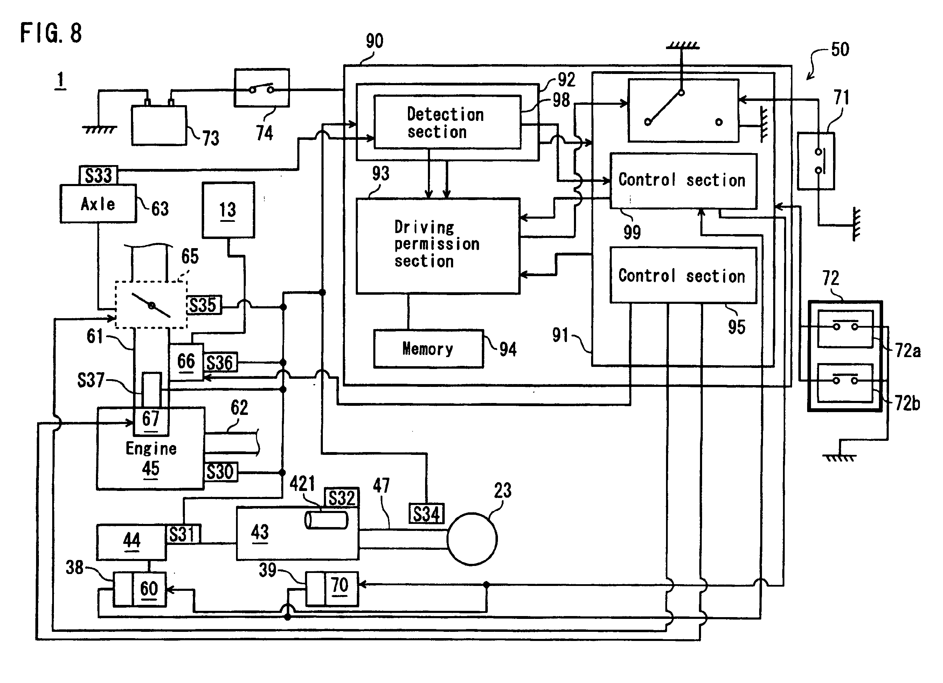

As shown in FIG. 8, the running state detection section 92 in this embodiment includes a detection section 98. The detection section 98 receives a signal input by the axle operation amount sensor S33 based on the amount of operation made on the axle 63. Thus, the detection section 98 detects the amount of operation made on the axle 63. Hereinafter, the amount of operation made on the axle 63 will be referred to simply as the "axle operation amount".

The automatic driving control section 91 includes a control section 99 for automatically controlling the actuator using the detection result obtained by the axle operation amount sensor S33. The control section 99 receives a signal input by the detection section 98 based on the axle operation amount and automatically controls the actuator.

The driving permission section 93 receives a signal input by the detection section 98 based on the axle operation amount. The driving permission section 93 determines whether or not either one of the detection section 98 and the axle operation amount sensor S33 has a malfunction from the input signal. The driving permission section 93 receives a signal input by the control section 99 of the automatic driving control section 91 based on the control made on the actuator. The driving permission section 93 determines whether or not the control section 99 has a malfunction from the input signal.

In this embodiment, the driving permission section 93 compares the signals input by the detection section 98 and the control section 99 against the data stored on the memory 94 to determine whether or not the gear change control device 50 has a malfunction. Namely, the driving permission section 93 determines whether or not either one of the axle operation amount sensor S33 and the control section 99 has a malfunction in order to determine whether or not the gear change control device 50 has a malfunction.

In this embodiment, in the case where the gear change control device 50 is in the automatic mode driving when the axle operation amount sensor S33 or the control section 99 has a malfunction, the driving permission section 93 switches the automatic mode driving to the manual mode driving regardless of whether the mode switch 71 has been operated or not. At this point, the automatic driving control section 91 is switched from the automatic mode control Ac to the manual mode control Mc.

Note that in this embodiment, the manual mode control Mc executed by the automatic driving control section 91 when the axle operation amount sensor S33 or the control section 99 has a malfunction is different from the manual mode control Mc executed when no malfunction occurs. Namely, in the case where the gear change control device 50 is in the manual mode driving, the control section 95 executes a different manner of control when the gear change control device 50 has the predetermined malfunction from when the gear change control device 50 does not have the predetermined malfunction. Herein, the manual mode control Mc executed by the automatic driving control section 91 when the axle operation amount sensor S33 or the control section 99 has a malfunction will be referred to as the "limp home control" like in embodiment 1.

When executing the limp home control, the control section 95 executes a different manner of control from the manual mode control Mc other than the limp home control. Namely, the output of the engine 45 is different when the automatic driving control section 91 executes the limp home control from when the automatic driving control section 91 executes the manual mode control Mc other than the limp home control. Specifically, the output of the engine 45 is suppressed more when the automatic driving control section 91 executes the limp home control than when the automatic driving control section 91 executes the manual mode control Mc other than the limp home control.

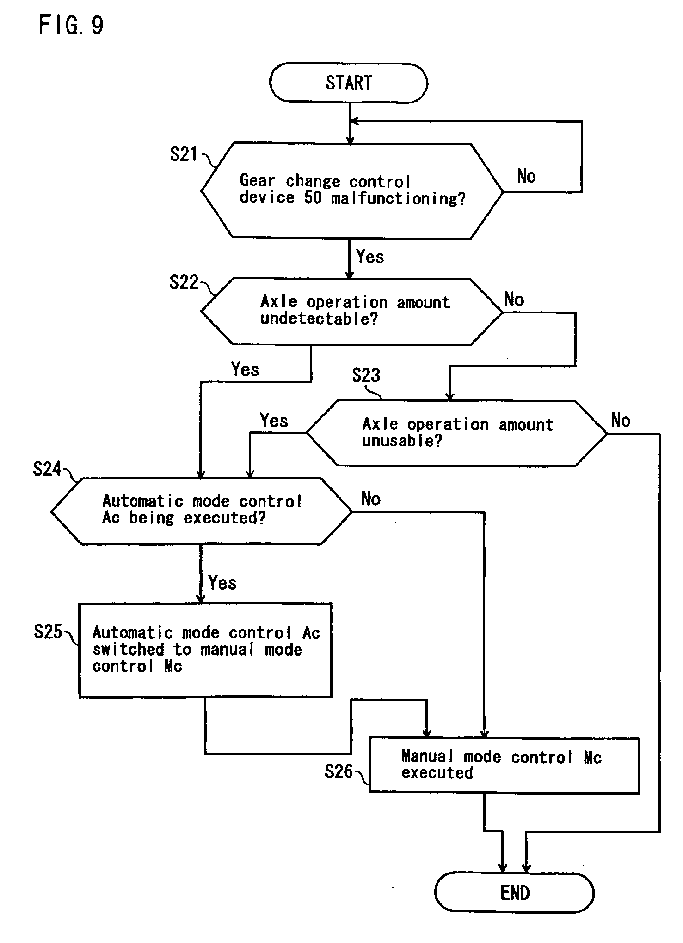

Hereinafter, how the automatic mode control Ac is switched to the manual mode control Mc and the limp home control is executed when the predetermined malfunction occurs will be described. FIG. 9 shows a flow of control until the limp home control is executed in the ECU 90 of the gear change control device 50 in this embodiment.

First in step S21, it is determined whether or not the gear change control device 50 has a malfunction. When it is determined in step S21 that the gear change control device 50 has a malfunction, the processing advances to step S22. When it is determined in step S21 that the gear change control device 50 does not have a malfunction, step S21 is repeated.

In step S22, it is determined whether or not the malfunction which the gear change control device 50 is determined to have in step S21 is a malfunction of the axle operation amount sensor S33. When the axle operation amount sensor S33 has a malfunction, the gear change control device 50, for example, cannot detect the axle operation amount accurately. When it is determined in step S22 that the malfunction is of the axle operation amount sensor S33, the processing advances to step S24. When it is determined in step S22 that the malfunction is not of the axle operation amount sensor S33, the processing advances to step S23.

In step S23, it is determined whether or not the malfunction which the gear change control device 50 is determined to have in step S21 is a malfunction of the control section 99. When the control section 99 has a malfunction, the gear change control device 50, for example, cannot drive the actuator based on the axle operation amount. Namely, when the control section 99 has a malfunction, the automatic driving control section 91 cannot execute any control using the axle operation amount. When it is determined in step S23 that the malfunction is of the control section 99, the processing advances to step S24. When it is determined in step S23 that the malfunction is not of the control section 99, the limp home control is not executed and the processing is finished.

In step S24, it is determined whether or not the control currently executed by the automatic driving control section 91 is the automatic mode control Ac. When it is determined in step S24 that the automatic driving control section 91 is not currently executing the automatic mode control Ac, namely, that the automatic driving control section 91 is currently executing the manual mode control Mc, the processing advances to step S26. When it is determined in step S24 that the automatic driving control section 91 is currently executing the automatic mode control Ac, the processing advances to step S25.

In step S25, the control to be executed by the automatic driving control section 91 is switched from the automatic mode control Ac to the manual mode control Mc. After the automatic mode control Ac is switched to the manual mode control Mc in step S25, the processing advances to step S26.

In step S26, the automatic driving control section 91 executes the manual mode control Mc. In this step, the limp home control, by which the output of the engine 45 (see FIG. 2) is suppressed more than by the usual manual mode control Mc, is executed. As described above, the gear change control device 50 switches the automatic mode driving to the manual mode driving when the predetermined malfunction occurs.

In this embodiment, the predetermined malfunction is a malfunction of the axle operation amount sensor S33 or the control section 99. When the axle operation amount sensor S33 has a malfunction, the gear change control device 50, for example, cannot detect the amount of operation made on the axle 63 accurately. When the control section 99 has a malfunction, the gear change control device 50, for example, cannot drive the actuator based on the amount of operation made on the axle 63.

However, the gear change control device 50 in this embodiment can execute the manual mode driving even when the axle operation amount sensor S33 or the control section 99 has a malfunction. By the automatic driving control section 91 executing the manual mode control Mc, the gear change control device 50 can execute the manual mode driving. The manual mode control Mc is executable even when the axle operation amount sensor S33 cannot detect the amount of operation made on the axle 63 accurately. With the manual mode control Mc, the actuator can be driven by an operation made by the rider on the shift switch 72 without the control section 99 driving the actuator using the amount of operation made on the axle 63.

Namely, the gear change control device 50 in this embodiment can execute the manual mode control Mc even when there is a malfunction relating to the amount of operation made on the axle 63. Therefore, even with a malfunction relating to the amount of operation made on the axle 63, the gear change control device 50 in this embodiment can keep driving the motorcycle 1 in the manual mode driving. For this reason, in this embodiment, the limp home capability of the motorcycle 1 switchable between the manual mode driving and the automatic mode driving can be improved.

### <Embodiment 3>

In embodiment 1, in the case where the driving is in the automatic mode driving when the vehicle velocity sensor S34 or the control section 97 has a malfunction, the driving permission section 93 switches the automatic mode driving to the manual mode driving regardless of whether the mode switch 71 has been operated or not.

Regarding embodiment 1, it is not limited to "regardless of whether the mode switch 71 has been operated or not" that the driving permission section 93 switches the automatic mode driving to the manual mode driving operation in the case where the gear change control device 50 is in the automatic mode driving when the vehicle velocity sensor S34 or the control section 97 has a malfunction. More specifically, the gear change control device 50 may be structured, such that the automatic mode driving is switched to the manual mode driving by an operation made on the mode switch 71 and the automatic driving control section 91 is switched from the automatic mode control Ac to the manual mode control Mc, in the case where the gear change control device 50 is in the automatic mode driving when the vehicle velocity sensor S34 or the control section 97 has a malfunction.

Regarding embodiment 2, it is not limited to "regardless of whether the mode switch 71 has been operated or not" that the driving permission section 93 switches the automatic mode driving to the manual mode driving in the case where the gear change control device 50 is in the automatic mode driving when the axle operation amount sensor S33 or the control section 99 has a malfunction. More specifically, the gear change control device 50 may be structured, such that the automatic mode driving is switched to the manual mode driving by an operation made on the mode switch 71 and the automatic driving control section 91 is switched from the automatic mode control Ac to the manual mode control Mc, in the case where the gear change control device 50 is in the automatic mode driving when the axle operation amount sensor S33 or the control section 99 has a malfunction.

Hereinafter, the control executed by the gear change control device 50 in this embodiment will be described. In this embodiment, when the gear change control device 50 has the predetermined malfunction, the manual mode driving is selected by an operation made by the rider, and as a result, the automatic driving control section 91 executes the manual mode control Mc. In the following description, identical elements to those in embodiment 1 or 2 will bear identical reference numerals thereto and the descriptions thereof will be omitted.

As shown in FIG. 1, the motorcycle 1 includes a display panel 15. The display panel 15 shown in FIG. 1 is an example of the display panel which may be included in the motorcycle 1, and the display panel is not limited to having the structure shown in FIG. 1. The display panel 15 is located at such a position of the body 100 that is visually recognizable easily by the rider when the rider sits on the seat 14. In the motorcycle 1, the display panel 15 is located inside a front cowling.

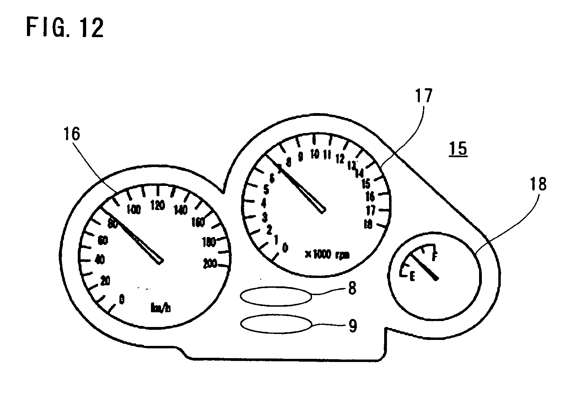

For example, the display panel 15 includes a lighting section 8 and a lighting section 9 (see FIG. 12). While the body 100 is driven in the manual mode driving, the lighting section 8 is lit up. While the body 100 is driven in the automatic mode driving, the lighting section 9 is lit up. Owing to this, the rider of the motorcycle 1 can visually recognize by the display panel 15 in which of the automatic driving and the manual mode driving the body 100 is being driven.

Note that the display panel 15 does not need to include the lighting section 8 and the lighting section 9 separately. For example, the display panel 15 may include another lighting section in which the lighting section 8 and the lighting section 9 are integrated. In this case, the lighting section is lit up with a different color when the body 100 is driven in the manual mode driving from when the body 100 is driven in the automatic mode driving. Owing to this, the rider of the motorcycle 1 can visually recognize by the display panel 15 in which of the automatic driving and the manual mode driving the body 100 is being driven. The display panel 15 may include a liquid crystal display section for displaying, by liquid crystal, whether the body 100 is being driven in the manual mode driving or the automatic mode driving. In this case, the liquid crystal display section provides a display different from the display when the body 100 is driven in the manual mode driving and also from the display when the body 100 is driven in the automatic mode driving.

As shown in FIG. 12, the display panel 15 includes a velocity meter 16, an engine rotation speedometer 17, and a fuel gauge 18.

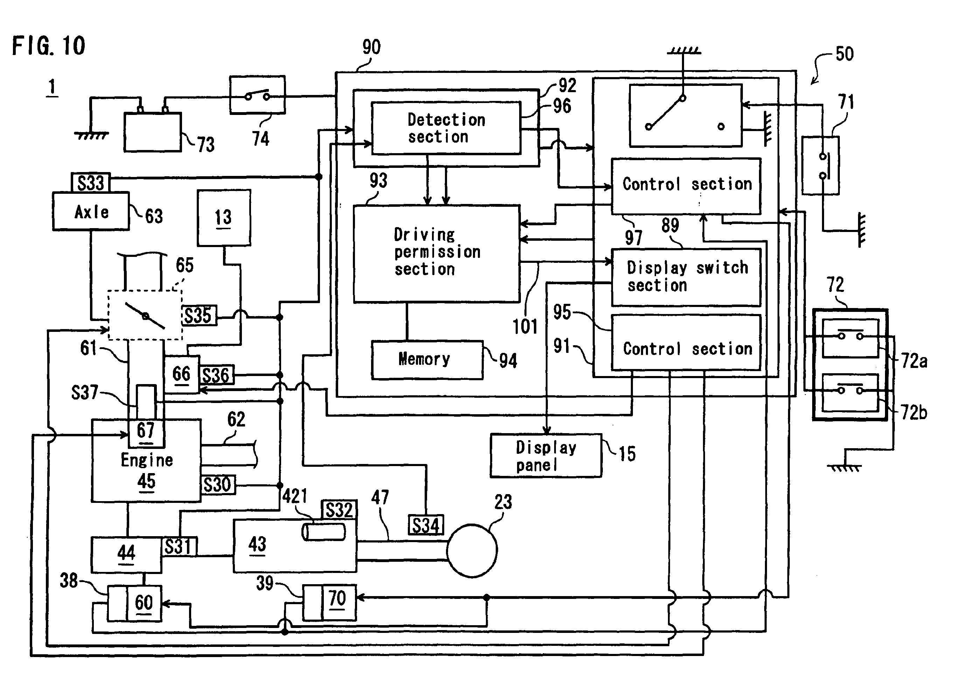

FIG. 10 is a block diagram showing a control structure of the gear change control device 50 in this embodiment. As shown in FIG. 10, the ECU 90 includes a display switch section 89. In this embodiment, the display switch section 89 is provided in the automatic driving control section 91. The display switch section 89 can switch the display of the display panel 15 in accordance with the control currently executed by the automatic driving control section 91. Namely, the display panel 15 displays which of the manual mode control Mc and the automatic mode control Ac is being executed by the automatic driving control section 91 based on the signal output from the display switch section 89.

When the predetermined malfunction occurs, the driving permission section 93 causes the display switch section 89 to switch the display of the display panel 15, such that the display panel 15 provides a display different from the display when the body 100 is driven in the manual mode driving and also from the display when the body 100 is driven in the automatic mode driving. As described above, in the display panel 15, the lighting section 8 is lit up in the case where the automatic driving control section 91 is executing the manual mode control Mc, whereas the lighting section 9 is lit up in the case where the automatic driving control section 91 is currently executing the automatic mode control Ac.

When the predetermined malfunction occurs, the display switch section 89 receives a signal 101 input by the driving permission section 93 based on the predetermined malfunction of the gear change control device 50. Thus, when the predetermined malfunction occurs, the display switch section 89 can switch the display of the display panel 15, such that the display panel 15 provides a display different from the display when the body 100 is driven in the manual mode driving and also from the display when the body 100 is driven in the automatic mode driving.

When the vehicle velocity sensor S34 or the control section 97 has a malfunction, the display switch section 89 receives the signal 101 input by the driving permission section 93. Thus, when the vehicle velocity sensor S34 or the control section 97 has a malfunction, the display switch section 89 can switch the display of the display panel 15, such that the display panel 15 provides a display different from the display when the body 100 is driven in the manual mode driving and also from the display when the body 100 is driven in the automatic mode driving. Alternatively, the display switch section 89 may receive the signal 101 from the driving permission section 93 when the axle operation amount sensor S33 or the control section 99 (see FIG. 8) has a malfunction. In this case, when the axle operation amount sensor S33 or the control section 99 has a malfunction, the display switch section 89 can switch the display of the display panel 15, such that the display panel 15 provides a display different from the display when the body 100 is driven in the manual mode driving and also from the display when the body 100 is driven in the automatic mode driving.

In this embodiment, when the predetermined malfunction occurs, the display switch section 89 causes the lighting section 8 to blink on and off regardless of whether the lighting section 8 or 9 has been lit up. Owing to this, the rider riding on the motorcycle 1 can recognize that a malfunction has occurred to the gear change control device 50 by which the driving cannot be continued in the automatic mode driving but can be continued in the manual mode driving.

Note that the display switch section 89 is not limited to causing the lighting section 8 to blink on and off when the predetermined malfunction occurs regardless of whether the lighting section 8 or 9 has been lit up. The display switch section 89 only needs to switch the display of the display panel 15 when the predetermined malfunction occurs, such that the display panel 15 provides a display different from the display when the body 100 is driven in the manual mode driving and also from the display when the body 100 is driven in the automatic mode driving.

Note that the motorcycle 1 is not limited to including the display panel 15 as an element for notifying that the driving in the automatic mode driving cannot be continued. Alternatively, the motorcycle 1 may include an element for notifying, by an audio output, that the driving in the automatic mode driving cannot be continued.

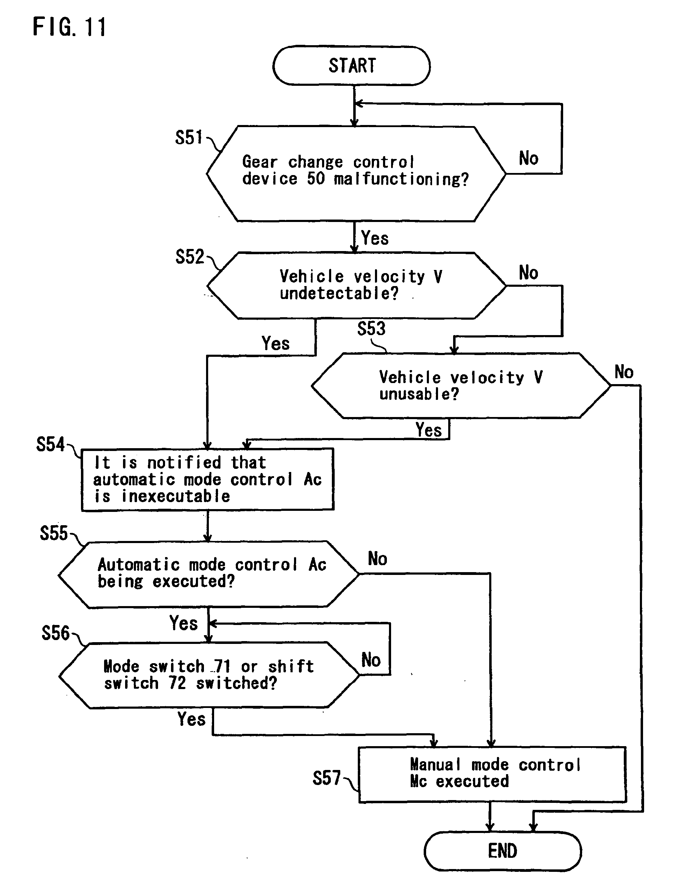

Hereinafter, the control of switching the display of the display panel 15 and executing the limp home control when the predetermined malfunction occurs will be described. FIG. 11 shows a flow of control until the limp home control is executed in the ECU 90 of the gear change control device 50 in this embodiment.

First in step S51, it is determined whether or not the gear change control device 50 has a malfunction. When it is determined in step S51 that the gear change control device 50 has a malfunction, the processing advances to step S52. When it is determined in step S51 that the gear change control device 50 does not have a malfunction, step S51 is repeated.

In step S52, it is determined whether or not the malfunction which the gear change control device 50 is determined to have in step S51 is a malfunction of the vehicle velocity sensor S34. When the vehicle velocity sensor S34 has a malfunction, the gear change control device 50, for example, cannot detect the vehicle velocity V accurately. When it is determined in step S52 that the malfunction is of the vehicle velocity sensor S34, the processing advances to step S54. When it is determined in step S52 that the malfunction is not of the vehicle velocity sensor S34, the processing advances to step S53.

In step S53, it is determined whether or not the malfunction which the gear change control device 50 is determined to have in step S51 is a malfunction of the control section 97. When the control section 97 has a malfunction, the gear change control device 50, for example, cannot drive the actuator based on the vehicle velocity V. Namely, when the control section 97 has a malfunction, the automatic driving control section 91 cannot execute any control using the vehicle velocity V. When it is determined in step S53 that the malfunction is of the control section 97, the processing advances to step S54. When it is determined in step S53 that the malfunction is not of the control section 97, the limp home control is not executed and the processing is finished.

In step S54, it is notified that the automatic driving control section 91 cannot execute the automatic mode control Ac. More specifically, the display of the display panel 15 is switched to provide a display different from the display when the body 100 is driven in the manual mode driving and also from the display when the body 100 is driven in the automatic mode driving. At this point, in the display panel 15, the lighting section 8 blinks on and off.

Next in step S55, it is determined whether or not the control currently executed by the automatic driving control section 91 is the automatic mode control Ac. When it is determined in step S55 that the automatic driving control section 91 is not currently executing the automatic mode control Ac, namely, that the automatic driving control section 91 is currently executing the manual mode control Mc, the processing advances to step S57. When it is determined in step S55 that the automatic driving control section 91 is currently executing the automatic mode control Ac, the processing advances to step S56. Steps S54 and S55 may be performed in the opposite order or in parallel to each other.

In step S56, it is determined whether or not either one of the mode switch 71 and the shift switch 72 has been switched after step S54. When it is determined in step S56 that the mode switch 71 or the shift switch 72 has been switched after step S54, the processing advances to step S57. When it is determined in step S56 that neither the mode switch 71 nor the shift switch 72 has been switched after step S54, step S56 is repeated.

In step S57, the automatic driving control section 91 executes the manual mode control Mc. In this step, the limp home control, by which the output of the engine 45 (see FIG. 2) is suppressed more than by the usual manual mode control Mc, is executed. As described above, the gear change control device 50 switches the automatic mode driving to the manual mode driving when the predetermined malfunction occurs.

Regarding the display of the display panel 15, in the case where the mode switch 71 or the shift switch 72 is switched after step S54, the lighting section 8 may be switched from the state of blinking on and off to the state of being lit up. Alternatively, even in the case where the mode switch 71 or the shift switch 72 is switched after step S54, the lighting section 8 may be kept blinking on and off.

As described above, in the case where the gear change control device 50 is in the automatic mode driving when the axle operation amount sensor S33 or the control section 99 has a malfunction, the automatic mode driving may be switched to the manual mode driving by an operation made by the rider on the mode switch 71. In this case, step S52 shown in FIG. 11 is replaced with step S22 shown in FIG. 9, and step S53 shown in FIG. 11 is replaced with step S23 shown in FIG. 9.

### <Other modifications>

In embodiment 1, the driving permission section 93 determines whether or not either one of the vehicle velocity sensor S34 and the control section 97 has a malfunction in order to determine whether or not the gear change control device 50 has a malfunction. In embodiment 2, the driving permission section 93 determines whether or not either one of the axle operation amount sensor S33 and the control section 99 has a malfunction in order to determine whether or not the gear change control device 50 has a malfunction. Alternatively, the driving permission section 93 may make such determinations both of examples 1 and 2. Namely, the driving permission section 93 may determine whether or not either one of the vehicle velocity sensor S34 and the control section 97 has a malfunction and also whether or not either one of the axle operation amount sensor S33 and the control section 99 has a malfunction, in order to determine whether or not the gear change control device 50 has a malfunction. Accordingly, unlike in embodiment 3, the driving permission section 93 may determine whether or not either one of the vehicle velocity sensor S34 and the control section 97 has a malfunction and also whether or not either one of the axle operation amount sensor S33 and the control section 99 has a malfunction, and cause the display switch section 89 to switch the display of the display panel 15.

### DESCRIPTION OF THE REFERENCE NUMERALS

- 1: Motorcycle
- 43: Shift mechanism (gear change device) (automatic gear change mechanism)
- 44: Clutch (automatic gear change mechanism)
- 45: Engine
- 50: Gear change control device
- 60: Clutch actuator (actuator) (automatic gear change mechanism)
- 63: Axle (axle operator)
- 70: Shift actuator (actuator) (automatic gear change mechanism)
- 71: Mode switch
- 72: Shift switch
- 89: Display switch section
- 90: ECU (automatic gear change mechanism)
- 91: Automatic driving control section (automatic control device)
- 93: Driving permission section (driving permission device)
- 95: Control section (engine control device)
- 97: Control section (first control section)
- 99: Control section (second control section)
- 100: Body
- S34: Vehicle velocity sensor
- S33: Axle operation amount sensor

## Claims

1. A gear change control device (50) mountable on a motorcycle and including a body and an automatic gear change mechanism which includes a dog clutch type gear change device having a plurality of gear positions and an actuator (60, 70) for making a gear change among the gear positions of the gear change device, the gear change control device comprising:
a shift switch (72) operable by a rider for issuing an instruction to make a gear change among the gear positions of the gear change device;
an automatic control device for automatically controlling the actuator based on a running state of the motorcycle;
a mode switch (71) for, by an operation made by the rider, making a switch between manual mode driving, by which the actuator is caused to make a gear change among the gear positions of the gear change device based on an operation made by the rider on the shift switch, and automatic mode driving, by which the actuator is caused to make a gear change among the gear positions of the gear change device by an automatic control executed by the automatic control device; and **characterized by**
a driving permission device (93) for restraining the automatic mode driving and permitting the manual mode driving when a predetermined malfunction occurs.

2. A gear change control device according to claim 1, wherein in the case where the gear change control device (50) is in the automatic mode driving when the predetermined malfunction occurs, the driving permission device (93) switches the automatic mode driving to the manual mode driving.

3. A gear change control device according to claim 1, wherein:
the motorcycle further includes a vehicle velocity sensor (S34) for detecting a velocity of the body;
the automatic control device includes a first control section (97) for automatically controlling the actuator using a detection result obtained by the vehicle velocity sensor; and
the predetermined malfunction is a malfunction of the vehicle velocity sensor or the first control section.

4. A gear change control device according to claim 1, wherein:
the motorcycle further includes an engine, an axle operator (63) operable by the rider for adjusting an output of the engine, and an axle operation amount sensor (S33) for detecting an amount of operation made by the axle operator;
the automatic control device includes a second control section (99) for automatically controlling the actuator using a detection result obtained by the axle operation amount sensor; and
the predetermined malfunction is a malfunction of the axle operation amount sensor or the second control section.

5. A gear change control device according to claim 1, wherein:
the motorcycle further includes an engine;
the gear change control device further comprises an engine control device (95) for controlling the engine; and
in the case where the gear change control device (50) is in the manual mode driving, the engine control device executes a different manner of control when the predetermined malfunction occurs from when no malfunction occurs.

6. A gear change control device according to claim 1, wherein:
the motorcycle further includes an engine;
the gear change control device (50) further comprises an engine control device (95) for controlling the engine; and
in the case where the gear change control device is in the manual mode driving, the engine control device executes a different manner of control when the predetermined malfunction occurs from when a malfunction different from the predetermined malfunction occurs.

7. A gear change control device according to claim 1, wherein:
the motorcycle further includes a power supply device (73), and a main switch (74) which is capable of switching on or off power supply between the power supply device and the gear change control device (50) and is operable by the rider; and
when the power supply between the power supply device and the gear change control device is switched from an OFF state to an ON state, the gear change control device is set to the manual mode driving.

8. A motorcycle, comprising a gear change control device according to claim 1.

## Patentansprüche

1. Eine Gangwechselsteuervorrichtung (50), die an einem Motorrad befestigbar ist und einen Körper und einen automatischen Gangwechselmechanismus umfasst, mit einer Klauenkupplung-Typ-Gangwechselvorrichtung mit einer Mehrzahl von Gangpositionen und einem Betätigungselement (60, 70) zum Durchführen eines Gangwechsels unter den Gangpositionen der Gangwechselvorrichtung, wobei die Gangwechselsteuervorrichtung folgende Merkmale aufweist:
einen Schiebeschalter (72), der durch einen Fahrer bedienbar ist, zum Erteilen eines Befehls, einen Gangwechsel unter den Gangpositionen der Gangwechselvorrichtung durchzuführen;
eine automatische Steuervorrichtung zum automatischen Steuern des Betätigungselements basierend auf einem Laufzustand des Motorrads;
einen Modusschalter (70) zum Durchführen, durch einen Vorgang, der durch den Fahrer durchgeführt wird, eines Schaltens zwischen Manuell-Modus-Antrieb, wodurch bewirkt wird, dass das Betätigungselement einen Gangwechsel unter den Gangpositionen der Gangwechselvorrichtung basierend auf einem Vorgang, der durch den Fahrer durchgeführt wird, an dem Schiebeschalter durchführt, und Automatik-Modus-Antrieb, wodurch bewirkt wird, dass das Betätigungselement einen Gangwechsel unter den Gangpositionen der Gangwechselvorrichtung durch eine automatische Steuerung, die durch die automatische Steuervorrichtung ausgeführt wird, durchführt; und **gekennzeichnet durch**
eine Antriebserlaubnisvorrichtung (93) zum Einschränken des Automatik-Modus-Antriebs und Erlauben des Manuell-Modus-Antriebs, wenn eine vorbestimmte Fehlfunktion auftritt.

2. Eine Gangwechselsteuervorrichtung gemäß Anspruch 1, bei der in dem Fall, dass die Gangwechselsteuervorrichtung (50) sich in dem Automatik-Modus-Antrieb befindet, wenn die vorbestimmte Fehlfunktion auftritt, die Antriebserlaubnisvorrichtung (93) den Automatik-Modus-Antrieb zu dem Manuell-Modus-Antrieb umschaltet.

3. Eine Gangwechselsteuervorrichtung gemäß Anspruch 1, bei der:
das Motorrad ferner einen Fahrzeuggeschwindigkeitssensor (S34) zum Erfassen einer Geschwindigkeit des Körpers umfasst;
die automatische Steuervorrichtung einen ersten Steuerabschnitt (97) zum automatischen Steuern des Betätigungselements unter Verwendung eines Erfassungsergebnisses, das durch den Fahrzeuggeschwindigkeitssensor erhalten wird, umfasst; und
die vorbestimmte Fehlfunktion eine Fehlfunktion des Fahrzeuggeschwindigkeitssensors oder des ersten Steuerabschnitts ist.

4. Eine Gangwechselsteuervorrichtung gemäß Anspruch 1, bei der:
das Motorrad ferner einen Motor, ein Achsenbedienelement (63), das durch den Fahrer bedienbar ist, zum Einstellen einer Ausgabeleistung des Motors, und einen Achsenbetriebmengensensor (S33) zum Erfassen einer Betriebsmenge, die durch das Achsenbedienelement durchgeführt wird, umfasst;
die automatische Steuervorrichtung einen zweiten Steuerabschnitt (99) zum automatischen Steuern des Betätigungselements unter Verwendung eines Erfassungsergebnisses, das durch den Achsenbetriebmengensensor erhalten wird, umfasst; und
die vorbestimmte Fehlfunktion eine Fehlfunktion des Achsenbetriebmengensensors oder des zweiten Steuerabschnitts ist.

5. Eine Gangwechselsteuervorrichtung gemäß Anspruch 1, bei der:
das Motorrad ferner einen Motor umfasst;
die Gangwechselsteuervorrichtung ferner eine Motorsteuervorrichtung (95) zum Steuern des Motors aufweist; und
in dem Fall, dass die Gangwechselsteuervorrichtung (50) sich in dem Manuell-Modus-Antrieb befindet, die Motorsteuervorrichtung eine unterschiedliche Art von Steuerung ausführt, wenn die vorbestimmte Fehlfunktion auftritt, als in dem Fall, in dem keine Fehlfunktion auftritt.

6. Eine Gangwechselsteuervorrichtung gemäß Anspruch 1, bei der:
das Motorrad ferner einen Motor umfasst;
die Gangwechselsteuervorrichtung (50) ferner eine Motorsteuervorrichtung (95) zum Steuern des Motors aufweist; und
in dem Fall, dass die Gangwechselsteuervorrichtung sich in dem Manell-Modus-Antrieb befindet, die Motorsteuervorrichtung eine unterschiedliche Art von Steuerung ausführt, wenn die vorbestimmte Fehlfunktion auftritt, als in dem Fall, in dem eine Fehlfunktion auftritt, die sich von der vorbestimmten Fehlfunktion unterscheidet.

7. Eine Gangwechselsteuervorrichtung gemäß Anspruch 1, bei der:
das Motorrad ferner eine Leistungsversorgungsvorrichtung (73) und einen Hauptschalter (74) umfasst, der in der Lage ist, eine Leistungsversorgung zwischen der Leistungsversorgungsvorrichtung und der Gangwechselsteuervorrichtung (50) an- oder auszuschalten, und durch den Fahrer bedienbar ist; und
wenn die Leistungsversorgung zwischen der Leistungsversorgungsvorrichtung und der Gangwechselsteuervorrichtung aus einem AUS-Zustand in einen AN-Zustand umgeschaltet wird, die Gangwechselsteuervorrichtung auf den Manuell-Modus-Antrieb eingestellt wird.

8. Ein Motorrad, das eine Gangwechselsteuervorrichtung gemäß Anspruch 1 aufweist.

## Revendications

1. Dispositif de contrôle de changement de vitesse (50) pouvant être monté sur une motocyclette et comportant un corps et un mécanisme de changement de vitesse automatique qui comporte un dispositif de changement d'engrenage de type accouplement à griffes présentant une pluralité de positions d'engrenage et un actionneur (60, 70) destiné à réaliser un changement de vitesse parmi les positions d'engrenage du dispositif de changement de vitesse, le dispositif de contrôle de changement de vitesse comprenant:
un commutateur de déplacement (72) pouvant être actionné par un conducteur en vue de fournir une instruction pour réaliser un changement de vitesse parmi les positions d'engrenage du dispositif de changement de vitesse;
un dispositif de commande automatique destiné à commander automatiquement l'actionneur sur base d'un état de conduite de la motocyclette;
un commutateur de mode (71) destiné à effectuer, par une opération réalisée par le conducteur, une commutation entre entraînement en mode manuel par lequel on fait que l'actionneur réalise un changement de vitesse parmi les positions d'engrenage du dispositif de changement de vitesse sur base d'une opération effectuée par le conducteur sur le commutateur de déplacement, et entraînement en mode automatique par lequel on fait effectuer par l'actionneur un changement de vitesse parmi les positions d'engrenage du dispositif de changement de vitesse par une commande automatique exécutée par le dispositif de commande automatique; et
**caractérisé par**
un dispositif d'autorisation d'entraînement (93) destiné à restreindre l'entraînement en mode automatique et à permettre l'entraînement en mode manuel lorsqu'il se produit un dysfonctionnement prédéterminé.

2. Dispositif de contrôle de changement de vitesse selon la revendication 1, dans lequel, si le dispositif de contrôle de changement de vitesse (50) est en entraînement en mode automatique lorsque se produit le dysfonctionnement prédéterminé, le dispositif d'autorisation d'entraînement (93) commute l'entraînement en mode automatique en entraînement en mode manuel.

3. Dispositif de contrôle de changement de vitesse selon la revendication 1, dans lequel:
la motocyclette comporte par ailleurs un capteur de vitesse de véhicule (S 34) destiné à détecter une vitesse du corps;
le dispositif de commande automatique comporte un premier segment de commande (97) destiné à commander automatiquement l'actionneur à l'aide d'un résultat de détection obtenu par le capteur de vitesse de véhicule; et
le dysfonctionnement prédéterminé est un dysfonctionnement du capteur de vitesse de véhicule ou du premier segment de commande.

4. Dispositif de contrôle de changement de vitesse selon la revendication 1, dans lequel:
la motocyclette comporte par ailleurs un moteur, un actionneur d'essieu (63) pouvant être actionné par le conducteur pour ajuster une sortie du moteur, et un capteur de quantité de fonctionnement d'essieu (S 33) destiné à détecter une quantité de fonctionnement réalisée par l'actionneur d'essieu;
le dispositif de commande automatique comporte un deuxième segment de commande (99) destiné à commander automatiquement l'actionneur à l'aide d'un résultat de détection obtenu par le capteur de quantité de fonctionnement d'essieu; et
le dysfonctionnement prédéterminé est un dysfonctionnement du capteur de quantité de fonctionnement d'essieu ou du deuxième segment de commande.

5. Dispositif de contrôle de changement de vitesse selon la revendication 1, dans lequel:
la motocyclette comporte par ailleurs un moteur;
le dispositif de contrôle de changement de vitesse comprend par ailleurs un dispositif de commande de moteur (95) destiné à commander le moteur; et
au cas où le dispositif de contrôle de changement de vitesse (50) est en entraînement en mode manuel, le dispositif de commande de moteur exécute une manière différente de commander lorsqu'il se produit le dysfonctionnement prédéterminé que lorsqu'il ne se produit pas de dysfonctionnement.

6. Dispositif de contrôle de changement de vitesse selon la revendication 1, dans lequel:
la motocyclette comporte par ailleurs un moteur;
le dispositif de contrôle de changement de vitesse (50) comprend par ailleurs un dispositif de commande de moteur (95) destiné à commander le moteur; et
au cas où le dispositif de contrôle de changement de vitesse est en entraînement en mode manuel, le dispositif de commande de moteur exécute une manière différente de commande lorsqu'il se produit le dysfonctionnement prédéterminé que lorsqu'il se produit un dysfonctionnement différent du dysfonctionnement prédéterminé.

7. Dispositif de contrôle de changement de vitesse selon la revendication 1, dans lequel:
la motocyclette comporte par ailleurs un dispositif d'alimentation de courant (73), et un interrupteur principal (74) qui est à même d'enclencher ou de couper l'alimentation de courant entre le dispositif d'alimentation de courant et le dispositif de contrôle de changement de vitesse (50) et qui peut être actionné par le conducteur; et
lorsque l'alimentation de courant entre le dispositif d'alimentation de courant et le dispositif de contrôle de changement de vitesse est commuté de l'état OFF (coupé) à l'état ON (enclenché), le dispositif de contrôle de changement de vitesse est réglé sur entraînement en mode manuel.

8. Motocyclette, comprenant un dispositif de contrôle de changement de vitesse selon la revendication 1.
